## Europäisches Patentamt

## European Patent Office

## Office européen des brevets

(19)

(11) Veröffentlichungsnummer: **0 038 992**

**A1**

(12) # EUROPÄISCHE PATENTANMELDUNG

(21) Anmeldenummer: **81102831.5**

(22) Anmeldetag: **13.04.81**

(51) Int. Cl.³: **G 02 B 5/172**
**G 02 B 7/26, B 24 B 35/00**

(30) Priorität: **24.04.80 DE 3015880**

(43) Veröffentlichungstag der Anmeldung:
**04.11.81 Patentblatt 81/44**

(84) Benannte Vertragsstaaten:
**AT BE CH DE FR GB IT LI NL SE**

(71) Anmelder: **SIEMENS AKTIENGESELLSCHAFT Berlin und München**
**Postfach 22 02 61**
**D-8000 München 22(DE)**

(72) Erfinder: **Hohenadl, Heinz**
**Aurbachstrasse 1**
**D-8000 München 90(DE)**

(72) Erfinder: **Horak, Otto**
**Hans-Keis-Strasse 52**
**D-8023 Pullach(DE)**

(72) Erfinder: **Oberbacher, Rudolf**
**Wolfratshauser Strasse 286 d**
**D-8000 München 71(DE)**

(54) Verfahren zur Herstellung einer Lichtwellenleiter verwendenden optischen Einrichtung.

(57) Zur genauen Reproduzierbarkeit der Koppelbedingungen in mit Glasfasern als Lichtwellenleiter realisierten optischen Koppel- und/oder Abzweigeinrichtungen werden die Glasfasern im Bereich der Einrichtungen mit Hilfe von Führungsnuten (2), die von einem plattenförmigen Substrat (1) zur Verfügung gestellt werden, exakt in ihrem Verlauf fixiert. Diese Führungsnuten (2) werden unter Verwendung eines ein Positivmuster der Nuten aufweisenden, in Ultraschallschwingungen versetzten Stempels unmittelbar in ein aus einem Glaskörper bestehendes Substrat (1) eingearbeitet, wodurch sowohl der Aufbau als auch die Fertigung solcher optischen Einrichtungen wesentlich vereinfacht werden.

./...

EP 0 038 992 A1

FIG 1

0038992

SIEMENS AKTIENGESELLSCHAFT          VPA 80 P 6582 E
Berlin und München

Verfahren zur Herstellung eines Aus/Einkopplers für
Lichtwellenleiter

Die Erfindung bezieht sich auf ein Verfahren zur Herstellung eines Aus/Einkopplers für Lichtwellenleiter entsprechend dem Oberbegriff des Patentanspruchs.

Aus der DE-OS 26 14 647 ist ein Aus/Einkoppler für Multimode-Lichtleitfasern bekannt, bei dem die Lichtwellenleiter im Bereich des Kopplers in Führungsnuten verlaufen, die auf fotolithographische Weise erzeugt werden. Hierzu wird z.B. auf die ebene Oberfläche einer Glasplatte eine Kunststoffolie aufgebracht, deren Struktur durch partielles Belichten so veränderbar ist, daß beim nachfolgenden Entwickeln entweder die belichteten oder die nichtbelichteten Bereiche wieder von der Glasplatte gelöst und die verbleibenden Folienbereiche in ihrer Struktur stabilisiert werden können. Auf diese Weise erhält man bei entsprechender Bemessung der zur Belichtung der Folie verwendeten Maske ein Muster von Führungsnuten, in die nun entweder Glasfasern als Lichtwellenleiter eingelegt werden können oder die mit einer Substanz gefüllt werden, die dann abschnittsweise als Lichtwellenleiter dient. Der unterschiedliche Brechungsindex der Glasplatte und der Kunststoffolie gegenüber dem Lichtwellenleiter verhindert dabei, daß das Licht aus den Lichtwellenleitern in die Glasplatte oder die Kunststoffolie übertreten kann.

Rt 1 Sse - 8.12.80

Die Herstellung solcher Führungsstrukturen für Lichtwellenleiter ist jedoch relativ aufwendig.

Aufgabe vorliegender Erfindung ist es daher, ein Verfahren der eingangs genannten Art so auszugestalten,
daß die Herstellung von Führungsstrukturen für Lichtwellenleiter wesentlich vereinfacht wird.

Erfindungsgemäß ergibt sich die Lösung dieser Aufgabe
dadurch, daß unmittelbar in ein aus einem Glas- oder
Keramikkörper bestehendes Substrat zu einer Oberfläche
des Körpers hin offene Nuten dem vorgesehenen Verlauf
der Lichtwellenleiter entsprechend durch das Anlegen
eines Stempels, der auf seiner dem Substrat zugewandten
Seite ein dem Nutverlauf entsprechendes Positiv-Muster
aufweist und in Ultraschallschwingungen versetzt ist,
unter Verwendung eines zwischen Stempel und Substrat
eingebrachten Schleifmittels eingearbeitet werden, daß
anschließend die Lichtwellenleiter in die Nuten eingelegt und danach die Nuten durch Auflegen einer Platte
verschlossen werden.

Die auf diese Weise erhaltenen Nuten weisen überraschend
eine den geforderten Bedingungen eines Ein/Auskopplers
entsprechende Oberfläche auf, d.h. sie haben für das in
den Lichtwellenleitern geführte Licht weitgehend Spiegelcharakter.

Nachfolgend wird anhand von zwei Figuren das Wesen des Erfindungsgegenstandes noch näher erläutert.

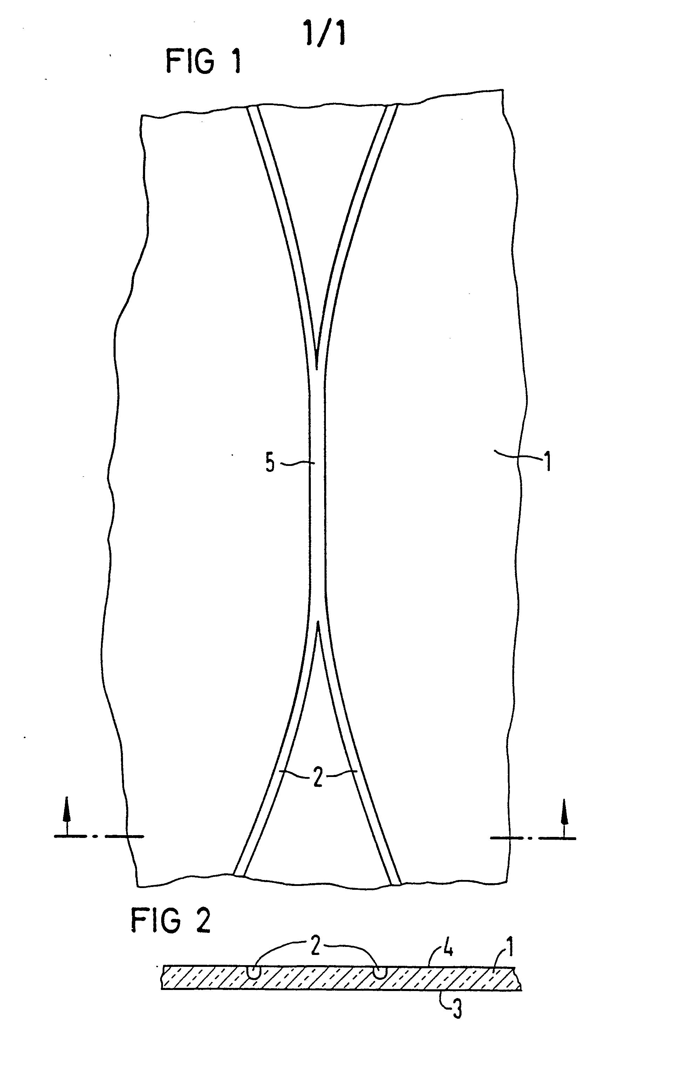

Die Figuren zeigen ein aus einer Glasplatte bestehendes Substrat in einer Ansicht von oben (Fig. 1) und im Querschnitt (Fig. 2), wobei das Substrat stark vergrößert dargestellt ist und alle nicht unbedingt zum Verständnis des Erfindungsgegenstandes erforderlichen Einzelheiten weggelassen worden sind.

Wie insbesondere Fig. 1 zeigt, ist in ein plattenförmiges Glassubstrat 1 ein System von Führungsnuten 2 eingearbeitet. Die Führungsnuten 2 sind zu einer (4) der beiden großen Oberflächen 3, 4 des Substrates 1 hin offen und bilden dadurch Leitkonturen zum Einlegen von z.B. aus Glasfasern bestehenden Lichtwellenleitern oder zur Aufnahme von Substanzen, z.B. aushärtenden Kunststoffen, die zur Fortleitung von Licht geeignet sind. Durch das Auflegen einer nicht dargestellten Glasplatte auf die Seite 4 des Substrates 1 werden die Nuten 2 verschlossen.

Bei dem in Fig. 1 dargestellten Ausführungsbeispiel einer mit  Lichtwellenleitern realisierten optischen Koppeleinrichtung verlaufen zwei Führungsnuten 2 jeweils bogenförmig gekrümmt derart, daß sie in einem bestimmten Abschnitt, in dem der Querschnitt der Führungsnut größer ist, als der Querschnitt der voneinander getrennt verlaufenden Nuten, ineinander übergehen. Bei entsprechender Auffüllung der Nuten 2 mit lichtleitendem Material wird daher eine optische Abzweig- oder Koppeleinrichtung erhalten.

Das Einarbeiten der Nuten in das Substrat 1 erfolgt mit Hilfe eines Stempels, der auf seiner, der Seite 4 des Substrates 1 zugewandten Seite ein Positiv-Muster des in Fig. 1 dargestellten Nutenverlaufs aufweist, d.h. wenn man sich die in Fig. 1 mit 2 bezeichneten Nuten als Stege denkt, so zeigt Fig. 1 die der Seite 4 des Substrates 1 (Fig. 2) zugewandte Seite des Stempels. Der in Ultraschallschwingungen versetzte Stempel berührt das Substrat 1 daher nur im Bereich der zu erzeugenden Nuten 2, wenn er an das Substrat 1 angelegt wird. Dabei ist es erforderlich, zwischen das Substrat 1 und den Stempel Schleifmittel einzubringen.

Bei diesen Schleifmitteln handelt es sich um Stoffe, wie sie üblicherweise beim Schleifen von Glas oder Keramik verwendet werden.

1 Patentanspruch
2 Figuren

**Patentanspruch**

Verfahren zur Herstellung eines Aus/Einkopplers für Lichtwellenleiter, bei dem die Lichtwellenleiter durch Fixierung an einem plattenförmigen Substrat in ihrem Verlauf zueinander festgelegt sind, d a d u r c h g e k e n n z e i c h n e t , daß unmittelbar in ein aus einem Glas- oder Keramikkörper bestehendes Substrat (1) zu einer Oberfläche (4) des Körpers (1) hin offene Nuten (2) dem vorgesehenen Verlauf der Lichtwellenleiter entsprechend durch das Anlegen eines Stempels, der auf seiner dem Substrat (1) zugewandten Seite ein dem Nutverlauf entsprechendes Positiv-Muster aufweist und in Ultraschallschwingungen versetzt ist, unter Verwendung eines zwischen Stempel und Substrat eingebrachten Schleifmittels eingearbeitet werden, daß anschließend die Lichtwellenleiter in die Nuten eingelegt und danach die Nuten (2) durch Auflegen einer Platte verschlossen werden.

FIG 1

5 1

2

FIG 2

2 4 1

3

Europäisches
Patentamt

**EUROPÄISCHER RECHERCHENBERICHT**

**0038992**
Nummer der Anmeldung

EP 81 10 2831

| | **EINSCHLÄGIGE DOKUMENTE** | | KLASSIFIKATION DER ANMELDUNG (Int. Cl. ·) |
|---|---|---|---|
| Kategorie | Kennzeichnung des Dokuments mit Angabe, soweit erforderlich, der maßgeblichen Teile | betrifft Anspruch | |
| | FR - A - 2 404 495 (SOVAL) <br> * Seite 2, Zeilen 24-37; Ansprüche; Figuren * <br><br> -- | 1 | G 02 B 5/172 <br> 7/26 <br> B 24 B 35/00 |
| | DE - B - 1 287 322 (A.O.C.) <br> * Spalte 2, Zeilen 15-66; Ansprüche; Figuren * <br><br> -- | 1 | |
| P | DE - A - 2 853 800 (SIEMENS) <br> * Seite 6, Zeilen 22-35 * <br><br> -- | 1 | RECHERCHIERTE SACHGEBIETE (Int Cl ·) |
| A | DE - A - 2 151 781 (I.K.A.N.G.) <br> * Seite 13, "Überführungsbeispiel" 6 * <br><br> -- | 1 | G 02 B 5/14 <br> 7/26 <br> B 24 B 35 |
| A | US - A - 4 165 225 (F. AURACHER) <br> * Ansprüche; Figuren * <br><br> ---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-08-1981 | PFAHLER |

EPA form 1503.1 06.78